# EUROPEAN PATENT APPLICATION

(11) **EP 2 186 845 A1**
(43) Date of publication of application: **19.05.2010**
(21) Application number: 08169314.5
(22) Date of filing: 18.11.2008
(51) Int. Cl.: C08G 73/02, C08L 79/02, C08L 101/00

(54) **Ammonium Functionalized Polymers as Antistatic Additives**

(71) Applicant: BASF SE, 67056 Ludwigshafen (DE)
(72) Inventor: Brand, Fabien Jean, 68330 Huningue (FR); Koroskenyi, Balint, Peekskill, NY 10566 (US); Peer, William Joseph, Memphis, TN 38125 (US)

(57) **Abstract**

The invention relates to antistatic polymer compositions comprising ammonium function-nalized polymers. Further aspects are a process for preparing an antistatic polymer, the use of ammonium functionalized polymers as antistatic agents in polymers and new ammonium functionalized polymers with specific counterions.

## Description

The invention relates to antistatic polymer compositions comprising ammonium functionnalized polymers. Further aspects are a process for preparing an antistatic polymer, the use of ammonium functionalized polymers as antistatic agents in polymers and new ammonium functionalized polymers with specific counterions.

Polymers are subject to a strong electrostatic charge which when applied, can be discharged only slowly due to low electrical conductivity. Rapid discharging is desirable for example for reasons of safety and aesthetics. Adverse effects of static charge build-up include the soiling of polymer surfaces, electrical shocks to persons touching polymers, disruption of production caused by the adhesion of film webs, destruction of electronic components, lump formation in polymer powders, and sparking followed by ignition, which may result in serious explosions.

It is known to limit static charging by the addition of additives that improve surface conductivity, but such substances have the disadvantage of being ineffective in practice when atmospheric humidity is low. It is therefore better to use additives that are effective at low atmospheric humidity, which can usually be achieved by increasing the volume conductivity. The known substances for increasing volume conductivity, for example carbon black or metal powder, however, alter the mechanical properties of the polymers and cannot be used for transparent polymers. In addition, the antistatic additive should not contribute to any discoloration of the polymer, even under thermal stress.

Further details relating to antistatic additives and the mechanism of static charging may be found, for example, in the "Plastics Additives Handbook", editors R. Gaechter and H. Mueller, Hanser Publishers, 4th edition, 1993, pages 749-773.

In view of the above-mentioned limitations of the known methods of rendering polymers antistatic, there continues to be a need for an antistatically active, ecologically unobjectionable additive system for increasing volume conductivity that is effective at low atmospheric humidity, which system is simple to produce, can easily be incorporated into or mixed with the polymer, retains over a long period the volume conductivity of the polymer achieved and, without any notable restriction, can be used in small amounts in all commercially available polymers. Surprisingly it has been found that specific ammonium functionalized polymers with selected counter ions are highly compatible with polymers, exhibit essentially no loss during thermal exposure, do not adversely affect the color of the polymer articles and lead to a permanent antistatic effect.

One aspect of the invention is a composition comprising a thermoplastic or elastomeric polymeric substrate and an antistatic polymer with a repeating unit of formula (I) 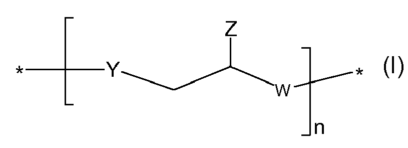 wherein
n is an integer from 5 to 500;
Z is hydrogen, C₁-C₁₈alkyl, OH, C₁-C₁₈alkoxy, a group C(O)R₁₀, -O-C(O)R₁₀ or COOR₁₀ wherein R₁₀ is H or C₁-C₁₈alkyl;
W is C₁-C₂₄alkylene, C₅-C₇cycloalkylene, -O-(CH₂-O)ₚ-, -O-(CH₂-CH₂-O)_{q}-, O-((CH₂)_{z}-O)ₜ-, CH₂-T-CH₂-CHZ-CH₂-;
T is C₁-C₂₄alkylene, C₅-C₇cycloalkylene,-O-(CH₂-O)ₚ-, -O-(CH₂-CH₂-O)_{q}-, O-(CH₂)_{z}-O-;
wherein p, q, z and t are independently integers from 0 to 100;
Y is a group 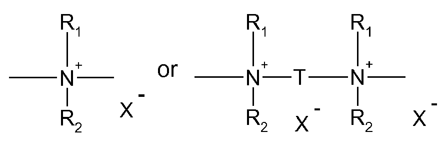 wherein
R₁ and R₂ are independently from each other H, C₁-C₁₈alkyl or R₁ and R₂ together with the nitrogen atom to which they are bonded form a 5, 6 or 7 membered cyclic ring; and
X⁻ is the anion of a C₁-C₁₈carboxylic acid, the anion of an aromatic or aliphatic sulfonic acid, sulphate, phosphate, borate, nitrate, ClO₄⁻, PF₆⁻, or BF₄⁻.

Examples of thermoplastic or elastomeric polymers are listed below.
1. Polymers of mono- and di-olefins, for example polypropylene, polyisobutylene, polybutene-1, poly-4-methylpentene-1, polyisoprene or polybutadiene and also polymerisates of cyclo-olefins, such as, for example, of cyclopentene or norbornene; and also polyethylene (which may optionally be cross-linked), for example high density polyethylene (HDPE), low density polyethylene (LDPE), linear low density polyethylene (LLDPE), branched low density polyethylene (BLDPE).
   Polyolefins, that is to say polymers of mono-olefins, as mentioned by way of example in the preceding paragraph, especially polyethylene and polypropylene, can be prepared by various processes, especially by the following methods:
   a) radically (usually at high pressure and high temperature);
   b) by means of catalysts, the catalyst usually containing one or more metals of group IVb, Vb, VIb or VIII. Those metals generally have one or more ligands, such as oxides, halides, alcoholates, esters, ethers, amines, alkyls, alkenyls and/or aryls, which may be either p- or s-coordinated. Those metal complexes may be free or fixed to carriers, such as, for example, to activated magnesium chloride, titanium(III) chloride, aluminium oxide or silicon oxide. Those catalysts may be soluble or insoluble in the polymerisation medium. The catalysts can be active as such in the polymerisation or further activators may be used, such as, for example, metal alkyls, metal hydrides, metal alkyl halides, metal alkyl oxides or metal alkyl oxanes, the metals being elements of group(s) Ia, IIa and/or IIIa. The activators may be modified, for example, with further ester, ether, amine or silyl ether groups. Those catalyst systems are usually known as Phillips, Standard Oil Indiana, Ziegler (-Natta), TNZ (DuPont), metallocene or single site catalysts (SSC).
2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).
3. Copolymers of mono- and di-olefins with one another or with other vinyl monomers, such as, for example, ethylene/propylene copolymers, linear low density polyethylene (LLDPE) and mixtures thereof with low density polyethylene (LDPE), propylene/butene-1 copolymers, propylene/isobutylene copolymers, ethylene/butene-1 copolymers, ethylene/hexene copolymers, ethylene/methylpentene copolymers, ethylene/heptene copolymers, ethylene/- octene copolymers, propylene/butadiene copolymers, isobutylene/isoprene copolymers, ethylene/alkyl acrylate copolymers, ethylene/alkyl methacrylate copolymers, ethylene/vinyl acetate copolymers and copolymers thereof with carbon monoxide, or ethylene/acrylic acid copolymers and salts thereof (ionomers), and also terpolymers of ethylene with propylene and a diene, such as hexadiene, dicyclopentadiene or ethylidenenorbornene; and also mixtures of such copolymers with one another or with polymers mentioned under 1), for example polypropylene-ethylene/propylene copolymers, LDPE-ethylene/vinyl acetate copolymers, LDPE-ethylene/acrylic acid copolymers, LLDPE-ethylene/vinyl acetate copolymers, LLDPE-ethylene/acrylic acid copolymers and alternately or randomly structured polyalkylene-carbon monoxide copolymers and mixtures thereof with other polymers, such as, for example, polyamides.
4. Hydrocarbon resins (for example C₅-C₉) including hydrogenated modifications thereof (for example tackifier resins) and mixtures of polyalkylenes and starch.
5. Polystyrene, poly(p-methylstyrene), poly(a-methylstyrene).
6. Copolymers of styrene or α-methylstyrene with dienes or acrylic derivatives, such as, for example, styrene/butadiene, styrene/acrylonitrile, styrene/alkyl methacrylate, styrene/- butadiene/alkyl acrylate and methacrylate, styrene/maleic acid anhydride, styrene/- acrylonitrile/methyl acrylate; high-impact-strength mixtures consisting of styrene copolymers and another polymer, such as, for example, a polyacrylate, a diene polymer or an ethylene/- propylene/diene terpolymer; and also block copolymers of styrene, such as, for example, styrene/butadiene/styrene, styrene/isoprene/styrene, styrene/ethylene-butylene/styrene or styrene/ethylene-propylene/styrene.
7. Graft copolymers of styrene or α-methylstyrene, such as, for example, styrene on polybutadiene, styrene on polybutadiene/styrene or polybutadiene/acrylonitrile copolymers, styrene and acrylonitrile (or methacrylonitrile) on polybutadiene; styrene, acrylonitrile and methyl methacrylate on polybutadiene; styrene and maleic acid anhydride on polybutadiene; styrene, acrylonitrile and maleic acid anhydride or maleic acid imide on polybutadiene; styrene and maleic acid imide on polybutadiene, styrene and alkyl acrylates or alkyl methacrylates on polybutadiene, styrene and acrylonitrile on ethylene/propylene/diene terpolymers, styrene and acrylonitrile on polyalkyl acrylates or polyalkyl methacrylates, styrene and acrylonitrile on acrylate/butadiene copolymers, and mixtures thereof with the copolymers mentioned under 6), such as those known, for example, as so-called ABS, MBS, ASA or AES polymers.
8. Halogen-containing polymers, such as, for example, polychloroprene, chlorocaoutchouc, chlorinated or chlorosulfonated polyethylene, copolymers of ethylene and chlorinated ethylene, epichlorohydrin homo- and co-polymers, especially polymers of halogen-containing vinyl compounds, such as, for example, polyvinyl chloride, polyvinylidene chloride, polyvinyl fluoride, polyvinylidene fluoride; and copolymers thereof, such as vinyl chloride/vinylidene chloride, vinyl chloride/vinyl acetate or vinylidene chloride/vinyl acetate.
9. Polymers derived from α,β-unsaturated acids and derivatives thereof, such as polyacrylates and polymethacrylates, or polymethyl methacrylates, polyacrylamides and polyacrylonitriles impact-resistant-modified with butyl acrylate.
10. Copolymers of the monomers mentioned under 9) with one another or with other unsaturated monomers, such as, for example, acrylonitrile/butadiene copolymers, acrylonitrile/alkyl acrylate copolymers, acrylonitrile/alkoxyalkyl acrylate copolymers, acrylonitrile/- vinyl halide copolymers or acrylonitrile/alkyl methacrylate/butadiene terpolymers.
11. Polymers derived from unsaturated alcohols and amines or their acyl derivatives or acetals, such as polyvinyl alcohol, polyvinyl acetate, stearate, benzoate or maleate, polyvinylbutyral, polyallyl phthalate, polyallylmelamine; and the copolymers thereof with olefins mentioned in Point 1.
12. Homo- and co-polymers of cyclic ethers, such as polyalkylene glycols, polyethylene oxide, polypropylene oxide or copolymers thereof with bisglycidyl ethers.
13. Polyacetals, such as polyoxymethylene, and also those polyoxymethylenes which contain comonomers such as, for example, ethylene oxide; polyacetals that are modified with thermoplastic polyurethanes, acrylates or MBS.
14. Polyphenylene oxides and sulfides and mixtures thereof with styrene polymers or polyamides.
15. Polyurethanes derived from polyethers, polyesters and polybutadienes having terminal hydroxy groups on the one hand and aliphatic or aromatic polyisocyanates on the other hand, and their initial products.
16. Polyamides and copolyamides derived from diamines and dicarboxylic acids and/or from aminocarboxylic acids or the corresponding lactams, such as polyamide 4, polyamide 6, polyamide 6,6, 6,10, 6,9, 6,12, 4,6, 12,12, polyamide 11, polyamide 12, aromatic polyamides derived from m-xylene, diamine and adipic acid; polyamides prepared from hexamethylenediamine and iso- and/or tere-phthalic acid and optionally an elastomer as modifier, for example poly-2,4,4-trimethylhexamethyleneterephthalamide or poly-m-phenylene-isophthalamide. Block copolymers of the above-mentioned polyamides with polyolefins, olefin copolymers, ionomers or chemically bonded or grafted elastomers; or with polyethers, such as, for example, with polyethylene glycol, polypropylene glycol or polytetramethylene glycol. Also polyamides or copolyamides modified with EPDM or ABS; and polyamides condensed during processing ("RIM polyamide systems").
17. Polyureas, polyimides, polyamide imides and polybenzimidazoles.
18. Polyesters derived from dicarboxylic acids and dialcohols and/or from hydroxycarboxylic acids or the corresponding lactones, such as polyethylene terephthalate, polybutylene terephthalate, poly-1,4-dimethylolcyclohexane terephthalate, polyhydroxybenzoates, and also block polyether esters derived from polyethers with hydroxy terminal groups; and also polyesters modified with polycarbonates or MBS.
19. Polycarbonates and polyester carbonates.
20. Polysulfones, polyether sulfones and polyether ketones.
21. Natural polymers, such as natural rubber, or polymer-homologously chemically modified derivatives of cellulose, such as cellulose acetates, propionates and butyrates, and the cellulose ethers, such as methyl cellulose.
22. Mixtures (polyblends) of the afore-mentioned polymers, such as, for example, PP/EPDM, polyamide/EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermoplastic PUR, POM/acrylate, POM/MBS, PPO/HIPS, PPO/PA 6,6 and copolymers, PA/HDPE, PA/PP, PA/PPO.

Preferably, the thermoplastic or elastomeric polymeric substrate is a polyolefin, a polystyrene, a copolymer of acrylonitrile/butadiene/styrene (ABS), a polymer of α,β-unsaturated acids, a halogen-containing polymer, a homo- or co-polymer of cyclic ethers, a polymer of unsaturated alcohols and amines, a polyacetal, a polyphenylene oxide, a polyurethane, a polyamide, a polyester, a polyurea, a polycarbonate, a polysulfone or natural rubber.

The thermoplastic or elastomeric polymeric substrate is especially a polyolefin, a polystyrene, an acrylonitrile/butadiene/styrene (ABS) copolymer, a polymer of at-unsaturated acids, a halogen-containing polymer or a homo- or co-polymer of cyclic ethers.

The thermoplastic or elastomeric polymeric substrate is more especially polyvinyl chloride (PVC), polystyrene, polyethylene in its various modifications, or polypropylene.

For example in the antistatic polymer with a repeating unit of formula (I)
n is an integer from 5 to 100;
Z is hydrogen, OH or-OC(O)R₁₀ wherein R₁₀ is H or C₁-C₁₈alkyl;
W is C₁-C₂₄alkylene, -O-(CH₂-O)ₚ-, -O-(CH₂-CH₂-O)_{q}-;
T is C₁-C₂₄alkylene, -O-(CH₂-O)ₚ-, -O-(CH₂-CH₂-O)_{q}-;
wherein p and q are independently integers from 1 to 20;
Y is a group 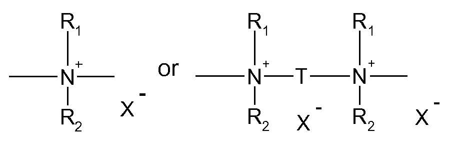 wherein
R₁ and R₂ are independently from each other H, C₁-C₁₈alkyl or R₁ and R₂ together with the nitrogen atom to which they are bonded form a 5, 6 or 7 membered cyclic ring; and
X⁻ is the anion of a an aromatic or aliphatic sulfonic acid, sulphate, phosphate, borate, nitrate, ClO₄⁻, PF₆⁻ or BF₄⁻.

For instance n is an integer from 10 to 100, preferably from 20 to 80.

For instance in the antistatic polymer with a repeating unit of formula (I) X⁻ is CH₃-SO₃⁻, CF₃SO₃⁻ or

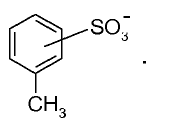

The preparation of the compounds of formula (I) can be carried out according to standard procedures. Polycondensation of the respective functional monomers with amines, such as:
(i) Polycondensation of epichlohydrine with amines or diamines;
(ii) Polycondensation of diglycidylether with amines or diamines;
(iii) Polycondensation of a monomer having both glycidylether and amine functions;
(iv) Polycondensation of bifunctional monomers (end-capped by two leaving groups) with amines or diamines. Suitable procedures are for example described in J. of Polym. Science:Part A: Polymer Chemistry, 40 (2002) 3570-3578 and J. Org. Chem., EN, 58:9; (1993); 2619-2627 or Am. Chem. Soc., EN, 103:19 (1981) 5788-5794.

The condensation of the secondary amine dimethylamine is described in the examples. Other co-monomers, such as, primary diamines can be considered as well. Also suitable are Jeffamines, secondary amine terminated polyethylene glycols available from Huntsman Inc. or end functionalized tertiary amine terminated polyethylene glycol obtained by the reaction of the Jeffamine with formol and formic acid.

Another option is using existing polymers, such as Alcofix 159(RTM) from Ciba Inc. and exchanging the counterion by ultrafiltration.

Preferably the antistatic polymer with a repeating unit of formula (I) is present in an amount of from 0.1 % to 30% by weight, more preferably from 5% to 30% based on the weight of the thermoplastic or elastomeric polymeric substrate.

In a specific embodiment of the invention an additional additive is present which is selected from the group consisting of a UV absorber, a sterically hindered amine, a phenolic antioxidant, a phosphite or phosphonite and a benzofuranone or indolinone.

Examples of additives suitable in the present invention are listed below.
1. Antioxidants
   1.1. Alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(a-methylcyclohexyl)-4,6-dimethylphenol, 2,6-dioctadecyl-4-methylphenol, 2,4,6-tricyclohexylphenol, 2,6-di-tert-butyl-4-methoxymethylphenol, nonylphenols which are linear or branched in the side chains, for example, 2,6-di-nonyl-4-methylphenol, 2,4-dimethyl-6-(1'-methylundec-1'-yl)phenol, 2,4-dimethyl-6-(1'-methylheptadec-1'-yl)phenol, 2,4-dimethyl-6-(1'-methyltridec-1'-yl)phenol and mixtures thereof.
   1.2. Alkylthiomethylphenols, for example 2,4-dioctylthiomethyl-6-tert-butylphenol, 2,4-dioctyl-thiomethyl-6-methylphenol, 2,4-dioctylthiomethyl-6-ethylphenol, 2,6-di-dodecylthiomethyl-4-nonylphenol.
   1.3. Hydroquinones and alkylated hydroquinones, for example 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis(3,5-di-tert-butyl-4-hydroxyphenyl) adipate.
   1.4. Tocopherols, for example α-tocopherol, β-tocopherol, γ-tocopherol, δ-tocopherol and mixtures thereof (vitamin E).
   1.5. Hydroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis(3,6-di-sec-amylphenol), 4,4'-bis(2,6-dimethyl-4-hydroxyphenyl)-disulfide.
   1.6. Alkylidenebisphenols, for example 2,2'-methylenebis(6-tert-butyl-4-methylphenol), 2,2'-methylenebis(6-tert-butyl-4-ethylphenol), 2,2'-methylenebis[4-methyl-6-(a-methylcyclohexyl)-phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(a-methylbenzyl)-4-nonylphenol], 2,2'-methylenebis[6-(α,α-dimethylbenzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methyl-phenyl)-3-n-dodecylmercaptobutane, ethylene glycol bis[3,3-bis(3'-tert-butyl-4'-hydroxyphenyl)butyrate], bis(3-tert-butyl-4-hydroxy-5-methyl-phenyl)dicyclopentadiene, bis[2-(3'-tert-butyl-2'-hydroxy-5'-methylbenzyl)-6-tert-butyl-4-methylphenyl]terephthalate, 1,1-bis-(3,5-dimethyl-2-hydroxyphenyl)butane, 2,2-bis(3,5-di-tert-butyl-4-hydroxyphenyl)propane, 2,2-bis(5-tert-butyl-4-hydroxy2-methylphenyl)-4-n-dodecylmercaptobutane, 1,1,5,5-tetra-(5-tert-butyl-4-hydroxy-2-methylphenyl)pentane.
   1.7. O-, N- and S-benzyl compounds, for example 3,5,3',5'-tetra-tert-butyl-4,4'-dihydroxydibenzyl ether, octadecyl-4-hydroxy-3,5-dimethylbenzylmercaptoacetate, tridecyl-4-hydroxy-3,5-di-tert-butylbenzylmercaptoacetate, tris(3,5-di-tert-butyl-4-hydroxybenzyl)amine, bis(4-tert-butyl-3-hydroxy-2,6-dimethylbenzyl)dithioterephthalate, bis(3,5-di-tert-butyl-4-hydroxybenzyl)sulfide, isooctyl-3,5-di-tert-butyl-4-hydroxybenzylmercaptoacetate.
   1.8. Hydroxybenzylated malonates, for example dioctadecyl-2,2-bis(3,5-di-tert-butyl-2-hydroxybenzyl)malonate, di-octadecyl-2-(3-tert-butyl-4-hydroxy-5-methylbenzyl)malonate, di-dodecylmercaptoethyl-2,2-bis (3,5-di-tert-butyl-4-hydroxybenzyl)malonate, bis[4-(1,1,3,3-tetramethylbutyl)phenyl]-2,2-bis(3,5-di-tert-butyl-4-hydroxybenzyl)malonate.
   1.9. Aromatic hydroxybenzyl compounds, for example 1,3,5-tris(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol.
   1.10. Triazine compounds, for example 2,4-bis(octylmercapto)-6-(3,5-di-tert-butyl-4-hydroxy-anilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris-(3,5-di-tert-butyl-4-hydroxyphenoxy)-1,2,3-triazine, 1,3,5-tris(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris-(3,5-di-tert-butyl-4-hydroxyphenylethyl)-1,3,5-triazine, 1,3,5-tris(3,5-di-tert-butyl-4-hydroxyphenylpropionyl)-hexahydro-1,3,5-triazine, 1,3,5-tris(3,5-dicyclohexyl-4-hydroxybenzyl)isocyanurate.
   1.11. Benzylphosphonates, for example dimethyl-2,5-di-tert-butyl-4-hydroxybenzylphosphonate, diethyl-3,5-di-tert-butyl-4-hydroxybenzylphosphonate, dioctadecyl3,5-di-tert-butyl-4-hydroxybenzylphosphonate, dioctadecyl-5-tert-butyl-4-hydroxy-3-methylbenzylphosphonate, the calcium salt of the monoethyl ester of 3,5-di-tert-butyl-4-hydroxybenzylphosphonic acid.
   1.12. Acylaminophenols, for example 4-hydroxylauranilide, 4-hydroxystearanilide, octyl N-(3,5-di-tert-butyl-4-hydroxyphenyl)carbamate.
   1.13. Esters of β-(3,5-di-tert-butyl-4-hydroxyphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
   1.14. Esters of β-(5-tert-butyl-4-hydroxy-3-methylphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis-(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane; 3,9-bis[2-{3-(3-tert-butyl-4-hydroxy-5-methylphenyl)propionyloxy}-1,1-dimethylethyl]-2,4,8,10-tetraoxaspiro[5.5]-undecane.
   1.15. Esters of β-(3,5-dicyclohexyl-4-hydroxyphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
   1.16. Esters of 3,5-di-tert-butyl-4-hydroxyphenyl acetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
   1.17. Amides of -(3,5-di-tert-butyl-4-hydroxyphenyl)propionic acid e.g. N,N'-bis(3,5-di-tert-butyl-4-hydroxyphenylpropionyl)hexamethylenediamide, N,N'-bis(3,5-di-tert-butyl-4-hydroxyphenylpropionyl)trimethylenediamide, N,N'-bis(3,5-di-tert-butyl-4-hydroxyphenylpropionyl)hydrazide, N,N'-bis[2-(3-[3,5-di-tert-butyl-4-hydroxyphenyl]propionyloxy)ethyl]oxamide (Naugard^{®}XL-1, supplied by Uniroyal).
   1.18. Ascorbic acid (vitamin C)
   1.19. Aminic antioxidants, for example N,N'-di-isopropyl-p-phenylenediamine, N,N'-di-sec-butyl-p-phenylenediamine, N,N'-bis(1,4-dimethylpentyl)-p-phenylenediamine, N,N'-bis(l-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenylenediamine, 4-(p-toluenesulfamoyl)diphenylamine, N,N'-dimethyl-N,N'-di-sec-butyl-p-phenylenediamine, diphenylamine, N-allyldiphenylamine, 4-isopropoxydiphenylamine, N-phenyl-1-naphthylamine, N-(4-tert-octylphenyl)-1-naphthylamine, N-phenyl-2-naphthylamine, octylated diphenylamine, for example p,p'-di-tert-octyldiphenylamine, 4-n-butyl-aminophenol, 4-butyrylaminophenol, 4-nonanoylaminophenol, 4-dodecanoylaminophenol, 4-octadecanoylaminophenol, bis(4-methoxyphenyl)amine, 2,6-di-tert-butyl-4-dimethylaminomethylphenol, 2,4'-diaminodiphenylmethane, 4,4'-diaminodiphenylmethane, N,N,N',N'-tetramethyl-4,4'-diaminodiphenylmethane, 1,2-bis[(2-methylphenyl)amino]ethane, 1,2-bis(phenyl-amino)propane, (o-tolyl)biguanide, bis[4-(1',3'-dimethylbutyl)phenyl]amine, tert-octylated N-phenyl-1-naphthylamine, a mixture of mono- and dialkylated tert-butyl/tert-octyldiphenyl-amines, a mixture of mono- and dialkylated nonyldiphenylamines, a mixture of mono- and dialkylated dodecyldiphenylamines, a mixture of mono- and dialkylated isopropyl/isohexyl-diphenylamines, a mixture of mono- and dialkylated tert-butyldiphenylamines, 2,3-dihydro-3,3-dimethyl-4H-1,4-benzothiazine, phenothiazine, a mixture of mono- and dialkylated tert-butyl/tert-octylphenothiazines, a mixture of mono- and dialkylated tert-octyl-phenothiazines, N-allylphenothiazine, N,N,N',N'-tetraphenyl-1,4-diaminobut-2-ene.
2. UV absorbers and light stabilizers
   2.1. 2-(2'-Hydroxyphenyl)benzotriazoles, for example 2-(2'-hydroxy-5'-methylphenyl)-benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chloro-benzotriazole, 2-(3'-tert-butyl-2'-hydroxy-5'-methylphenyl)-5-chloro-benzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis-(a,a-dimethylbenzyl)-2'-hydroxyphenyl)benzotriazole, 2-(3'-tert-butyl-2'-hydroxy-5'-(2-octyloxycarbonylethyl)phenyl)-5-chloro-benzotriazole, 2-(3'-tert-butyl-5'-[2-(2-ethylhexyloxy)-carbonylethyl]-2'-hydroxyphenyl)-5-chloro-benzotriazole, 2-(3'-tert-butyl-2'-hydroxy-5'-(2-methoxycarbonylethyl)phenyl)-5-chloro-benzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, 2-(3'-tert-butyl-2'-hydroxy-5'-(2-isooctyloxycarbonylethyl)phenylbenzotriazole, 2,2'-methylene-bis[4-(1,1,3,3-tetramethylbutyl)-6-benzotriazole-2-ylphenol]; the transesterification product of 2-[3'-tert-butyl-5'-(2-methoxycarbonylethyl)-2'-hydroxyphenyl]-2H-benzotriazole with polyethylene glycol 300; [R-CH₂CH₂COO-CH₂CH₂⁆₂ , where R = 3'-tert-butyl-4'-hydroxy-5'-2H-benzotriazol-2-ylphenyl, 2-[2'-hydroxy-3'-(a,a-dimethylbenzyl)-5'-(1,1,3,3-tetramethylbutyl)-phenyl]-benzotriazole; 2-[2'-hydroxy-3'-(1,1,3,3-tetramethylbutyl)-5'-(α,α-dimethylbenzyl)-phenyl]benzotriazole.
   2.2. 2-Hydroxybenzophenones, for example the 4-hydroxy, 4-methoxy, 4-octyloxy, 4-decyloxy, 4-dodecyloxy, 4-benzyloxy, 4,2',4'-trihydroxy and 2'-hydroxy-4,4'-dimethoxy derivatives.
   2.3. Esters of substituted and unsubstituted benzoic acids, for example 4-tert-butyl-phenyl salicylate, phenyl salicylate, octylphenyl salicylate, dibenzoyl resorcinol, bis(4-tert-butylbenzoyl)resorcinol, benzoyl resorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxybenzoate.
   2.4. Acrylates, for example ethyl α-cyano-β,β-diphenylacrylate, isooctyl α-cyano-β**,**β-diphenylacrylate, methyl α-carbomethoxycinnamate, methyl α-cyano-β**-**methyl-p-methoxycinnamate, butyl α-cyano-β-methyl-p-methoxy-cinnamate, methyl α-carbomethoxy-p-methoxycinnamate, N-(β-carbomethoxy-β-cyanovinyl)-2-methylindoline, neopentyl tetra(α-cyano-β,β-diphenylacrylate.
   2.5. Nickel compounds, for example nickel complexes of 2,2'-thio-bis[4-(1,1,3,3-tetramethylbutyl)phenol], such as the 1:1 or 1:2 complex, with or without additional ligands such as n-butylamine, triethanolamine or N-cyclohexyldiethanolamine, nickel dibutyldithiocarbamate, nickel salts of the monoalkyl esters, e.g. the methyl or ethyl ester, of 4-hydroxy-3,5-di-tert-butylbenzylphosphonic acid, nickel complexes of ketoximes, e.g. of 2-hydroxy-4-methylphenylundecylketoxime, nickel complexes of 1-phenyl-4-lauroyl-5-hydroxypyrazole, with or without additional ligands.
   2.6. Sterically hindered amines, for example bis(2,2,6,6-tetramethyl-4-piperidyl)sebacate, bis(2,2,6,6-tetramethyl-4-piperidyl)succinate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethyl-4-piperidyl) n-butyl-3,5-di-tert-butyl-4-hydroxybenzylmalonate, the condensate of 1-(2-hydroxyethyl)-2,2,6,6-tetramethyl-4-hydroxypiperidine and succinic acid, linear or cyclic condensates of N,N'-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl)nitrilotriacetate, tetrakis(2,2,6,6-tetramethyl-4-piperidyl)-1,2,3,4-butanetetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl)-malonate, 3-n-octyl-7,7,9,9-tetramethyl-1,3,8-triazaspiro[4.5]decane-2,4-dione, bis(1-octyloxy-2,2,6,6-tetramethylpiperidyl)sebacate, bis(1-octyloxy-2,2,6,6-tetramethylpiperidyl)succinate, linear or cyclic condensates of N,N'-bis(2,2,6,6-tetramethyl-4-piperidyl)hexamethylenediamine and 4-morpholino-2,6-dichloro-1,3,5-triazine, the condensate of 2-chloro-4,6-bis(4-n-butylamino-2,2,6,6-tetramethylpiperidyl)-1,3,5-triazine and 1,2-bis(3-aminopropylamino)-ethane, the condensate of 2-chloro-4,6-di-(4-n-butylamino-1,2,2,6,6-pentamethylpiperidyl)-1,3,5-triazine and 1,2-bis(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidine-2,5-dione, 3-dodecyl-1-(1,2,2,6,6-pentamethyl-4-piperidyl)pyrrolidine-2,5-dione, a mixture of 4-hexadecyloxy- and 4-stearyloxy-2,2,6,6-tetramethylpiperidine, a condensate of N,N'-bis(2,2,6,6-tetramethyl-4-piperidyl)hexamethylenediamine and 4-cyclohexylamino-2,6-dichloro-1,3,5-triazine, a condensate of 1,2-bis(3-aminopropylamino)ethane and 2,4,6-trichloro-1,3,5-triazine as well as 4-butylamino-2,2,6,6-tetramethylpiperidine (CAS Reg. No. [136504-96-6]); a condensate of 1,6-hexanediamine and 2,4,6-trichloro-1,3,5-triazine as well as N,N-dibutylamine and 4-butylamino-2,2,6,6-tetramethylpiperidine (CAS Reg. No. [192268-64-7]); N-(2,2,6,6-tetramethyl-4-piperidyl)-n-dodecylsuccinimide, N-(1,2,2,6,6-pentamethyl-4-piperidyl)-n-dodecylsuccinimide, 2-undecyl-7,7,9,9-tetramethyl-1-oxa-3,8-diaza-4-oxo-spiro-[4,5]decane, a reaction product of 7,7,9,9-tetramethyl-2-cycloundecyl-1-oxa-3,8-diaza-4-oxo-spiro-[4,5]decane and epichlorohydrin, 1,1-bis(1,2,2,6,6-pentamethyl-4-piperidyloxycarbonyl)-2-(4-methoxyphenyl)ethene, N,N'-bis-formyl-N,N'-bis(2,2,6,6-tetramethyl-4-piperidyl)-hexamethylenediamine, a diester of 4-methoxymethylenemalonic acid with 1,2,2,6,6-pentamethyl-4-hydroxypiperidine, poly[methylpropyl-3-oxy-4-(2,2,6,6-tetramethyl-4-piperidyl)]siloxane, a reaction product of maleic acid anhydride-α-olefin copolymer with 2,2,6,6-tetramethyl-4-aminopiperidine or 1,2,2,6,6-pentamethyl-4-aminopiperidine, 2,4-bis[N-(1-cyclohexyloxy-2,2,6,6-tetramethylpiperidine-4-yl)-N-butylamino]-6-(2-hydroxyethyl)amino-1,3,5-triazine, 1-(2-hydroxy-2-methylpropoxy)-4-octadecanoyloxy-2,2,6,6-tetramethylpiperidine, 5-(2-ethylhexanoyl)oxymethyl-3,3,5-trimethyl-2-morpholinone, Sanduvor (Clariant; CAS Reg. No. 106917-31-1], 5-(2-ethylhexanoyl)oxymethyl-3,3,5-trimethyl-2-morpholinone, the reaction product of 2,4-bis[(1-cyclohexyloxy-2,2,6,6-piperidine-4-yl)butylamino]-6-chloro-s-triazine with N,N'-bis(3-aminopropyl)ethylenediamine), 1,3,5-tris(N-cyclohexyl-N-(2,2,6,6-tetramethylpiperazine-3-one-4-yl)amino)-s-triazine, 1,3,5-tris(N-cyclohexyl-N-(1,2,2,6,6-pentamethylpiperazine-3-one-4-yl)amino)-s-triazine.
   2.7. Oxamides, for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethoxanilide and its mixture with 2-ethoxy-2'-ethyl-5,4'-di-tert-butoxanilide, mixtures of o- and p-methoxy-disubstituted oxanilides and mixtures of o- and p-ethoxy-disubstituted oxanilides.
   2.8. 2-(2-Hydroxyphenyl)-1,3,5-triazines, for example 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxypropoxy)phenyl]-4,6-bis(2,4-dimethyl)-1,3,5-triazine, 2-[2-hydroxy-4-(2-hydroxy-3-octyloxypropyloxy)phenyl]-4,6-bis(2,4-dimethyl)-1,3,5-triazine, 2-[4-(dodecyloxy/tridecyloxy-2-hydroxypropoxy)-2-hydroxyphenyl]-4,6-bis(2,4-dimethylphenyl)-1,3,5-triazine, 2-[2-hydroxy-4-(2-hydroxy-3-dodecyloxypropoxy)phenyl]-4,6-bis(2,4-dimethylphenyl)-1,3,5-triazine, 2-(2-hydroxy-4-hexyloxy)phenyl-4,6-diphenyl-1,3,5-triazine, 2-(2-hydroxy-4-methoxyphenyl)-4,6-diphenyl-1,3,5-triazine, 2,4,6-tris[2-hydroxy-4-(3-butoxy-2-hydroxypropoxy)phenyl]-1,3,5-triazine, 2-(2-hydroxyphenyl)-4-(4-methoxyphenyl)-6-phenyl-1,3,5-triazine, 2-{2-hydroxy-4-[3-(2-ethylhexyl-1-oxy)-2-hydroxypropyloxy]phenyl}-4,6-bis(2,4-dimethylphenyl)-1,3,5-triazine, 2,4-bis(4-[2-ethylhexyloxy]-2-hydroxyphenyl)-6-(4-methoxyphenyl)-1,3,5-triazine.
3. Metal deactivators, for example N,N'-diphenyloxamide, N-salicylal-N'-salicyloyl hydrazine, N,N'-bis(salicyloyl)hydrazine, N,N'-bis(3,5-di-tert-butyl-4-hydroxyphenylpropionyl)hydrazine, 3-salicyloylamino-1,2,4-triazole, bis(benzylidene)oxalyl dihydrazide, oxanilide, isophthaloyl dihydrazide, sebacoyl bisphenylhydrazide, N,N'-diacetyladipoyl dihydrazide, N,N'-bis(salicyloyl)oxalyl dihydrazide, N,N'-bis(salicyloyl)thiopropionyl dihydrazide.
4. Phosphites and phosphonites, for example triphenyl phosphite, diphenylalkyl phosphites, phenyldialkyl phosphites, tris(nonylphenyl) phosphite, trilauryl phosphite, trioctadecyl phosphite, distearylpentaerythritol diphosphite, tris(2,4-di-tert-butylphenyl) phosphite, diisodecyl pentaerythritol diphosphite, bis(2,4-di-tert-butylphenyl)pentaerythritol diphosphite, bis(2,4-dicumylphenyl)pentaerythritol diphosphite, bis(2,6-di-tert-butyl-4-methylphenyl)pentaerythritol diphosphite, diisodecyloxypentaerythritol diphosphite, bis(2,4-di-tert-butyl-6-methylphenyl)-pentaerythritol diphosphite, bis(2,4,6-tris(tert-butylphenyl)pentaerythritol diphosphite, tristearyl sorbitol triphosphite, tetrakis(2,4-di-tert-butylphenyl) 4,4'-biphenylene diphosphonite, 6-isooctyloxy-2,4,8,10-tetra-tert-butyl-12H-dibenz[d,g]-1,3,2-dioxaphosphocin, bis(2,4-di-tert-butyl-6-methylphenyl)methyl phosphite, bis(2,4-di-tert-butyl-6-methylphenyl)ethyl phosphite, 6-fluoro-2,4,8,10-tetra-tert-butyl-12-methyl-dibenz[d,g]-1,3,2-dioxaphosphocin, 2,2',2"-nitrilo-[triethyltris(3,3',5,5'-tetra-tert-butyl-1,1'-biphenyl-2,2'-diyl)phosphite], 2-ethylhexyl(3,3',5,5'-tetra-tert-butyl-1,1'-biphenyl-2,2'-diyl)phosphite, 5-butyl-5-ethyl-2-(2,4,6-tri-tert-butylphenoxy)-1,3,2-dioxaphosphirane.
   The following phosphites are especially preferred:
   Tris(2,4-di-tert-butylphenyl) phosphite (Irgafos^{®}168, Ciba Specialty Chemicals Inc.), tris(nonylphenyl) phosphite, 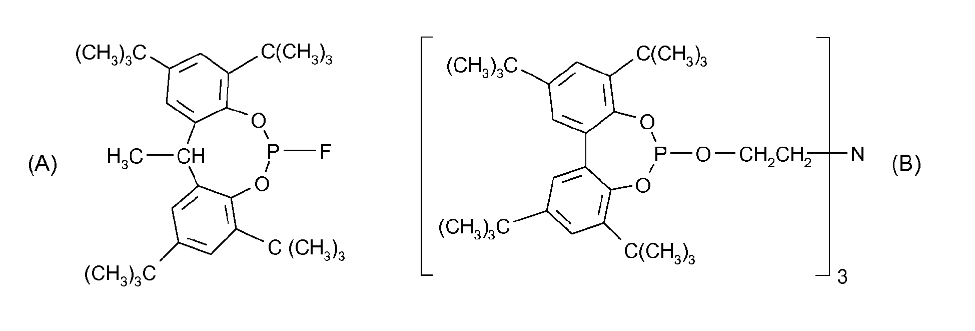 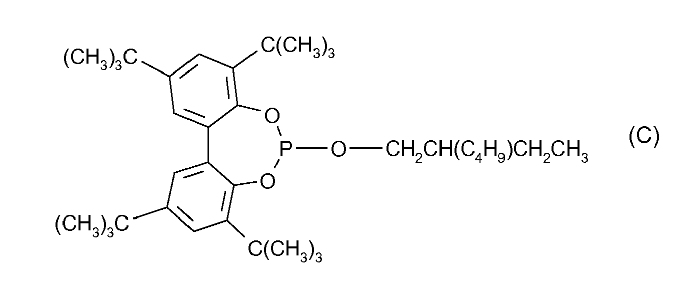 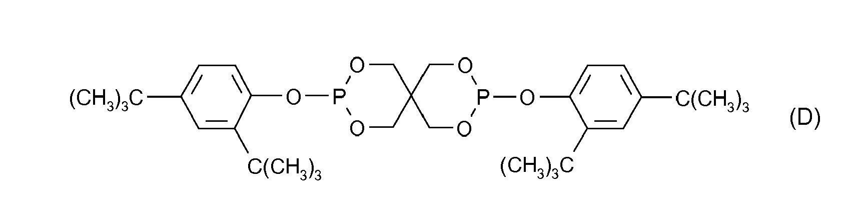 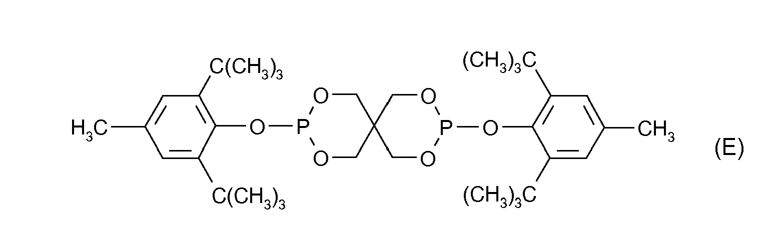 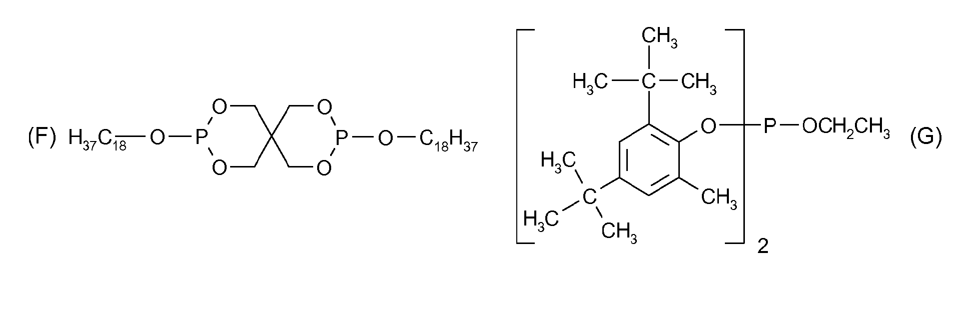
5. Hydroxylamines, for example N,N-dibenzylhydroxylamine, N,N-diethylhydroxylamine, N,N-dioctylhydroxylamine, N,N-dilaurylhydroxylamine, N,N-ditetradecylhydroxylamine, N,N-dihexadecylhydroxylamine, N,N-dioctadecylhydroxylamine, N-hexadecyl-N-octadecylhydroxylamine, N-heptadecyl-N-octadecylhydroxylamine, N,N-dialkylhydroxylamine derived from hydrogenated tallow amine.
6. Nitrones, for example, N-benzyl-alpha-phenylnitrone, N-ethyl-alpha-methylnitrone, N-octyl-alpha-heptylnitrone, N-lauryl-alpha-undecylnitrone, N-tetradecyl-alpha-tridecylnnitrone, N-hexadecyl-alpha-pentadecylnitrone, N-octadecyl-alpha-heptadecylnitrone, N-hexadecyl-alpha-heptadecylnitrone, N-ocatadecyl-alpha-pentadecylnitrone, N-heptadecyl-alpha-heptadecylnitrone, N-octadecyl-alpha-hexadecylnitrone, nitrone derived from N,N-dialkylhydroxylamine derived from hydrogenated tallow amine.
7. Thiosynergists, for example dilauryl thiodipropionate, dimistryl thiodipropionate, distearyl thiodipropionate or distearyl disulfide.
8. Peroxide scavengers, for example esters of β**-**thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis(β-dodecylmercapto)propionate.
9. Polyamide stabilizers, for example copper salts in combination with iodides and/or phosphorus compounds and salts of divalent manganese.
10. Basic co-stabilizers, for example melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids, for example calcium stearate, zinc stearate, magnesium behenate, magnesium stearate, sodium ricinoleate and potassium palmitate, antimony pyrocatecholate or zinc pyrocatecholate.
11. Nucleating agents, for example inorganic substances, such as talcum, metal oxides, such as titanium dioxide or magnesium oxide, phosphates, carbonates or sulfates of, preferably, alkaline earth metals; organic compounds, such as mono- or polycarboxylic acids and the salts thereof, e.g. 4-tert-butylbenzoic acid, adipic acid, diphenylacetic acid, sodium succinate or sodium benzoate; polymeric compounds, such as ionic copolymers (ionomers). Especially preferred are 1,3:2,4-bis(3',4'-dimethylbenzylidene)sorbitol, 1,3:2,4-di(paramethyldibenzylidene)sorbitol, and 1,3:2,4-di(benzylidene)sorbitol.
12. Fillers and reinforcing agents, for example calcium carbonate, silicates, glass fibres, glass beads, asbestos, talc, kaolin, mica, barium sulfate, metal oxides and hydroxides, carbon black, graphite, wood flour and flours or fibers of other natural products, synthetic fibers.
13. Other additives, for example plasticisers, lubricants, emulsifiers, pigments, rheology additives, catalysts, flow-control agents, optical brighteners, flameproofing agents, antistatic agents and blowing agents.
14. Benzofuranones and indolinones, for example those disclosed in U.S. 4,325,863; U.S. 4,338,244; U.S. 5,175,312; U.S. 5,216,052; U.S. 5,252,643; DE-A-4316611; DE-A-4316622; DE-A-4316876; EP-A-0589839, EP-A-0591102; EP-A-1291384 or 3-[4-(2-acetoxyethoxy)phenyl]-5,7-di-tert-butylbenzofuran-2-one, 5,7-di-tert-butyl-3-[4-(2-stearoyloxyethoxy)phenyl]benzofuran-2-one, 3,3'-bis[5,7-di-tert-butyl-3-(4-[2-hydroxyethoxy]phenyl)benzofuran-2-one], 5,7-di-tert-butyl-3-(4-ethoxyphenyl)benzofuran-2-one, 3-(4-acetoxy-3,5-dimethylphenyl)-5,7-di-tert-butylbenzofuran-2-one, 3-(3,5-dimethyl-4-pivaloyloxyphenyl)-5,7-di-tert-butylbenzofuran-2-one, 3-(3,4-dimethylphenyl)-5,7-di-tert-butylbenzofuran-2-one, 3-(2,3-dimethylphenyl)-5,7-di-tert-butylbenzofuran-2-one, 3-(2-acetyl-5-isooctylphenyl)-5-isooctyl-benzofuran-2-one.

These further additives are usually added in an amount of from 0.1 to 5% by weight, based on the weight of the thermoplastic or elastomeric polymeric substrate.

Another aspect of the invention is a process for preparing an antistatic thermoplastic or elastomeric polymeric article comprising incorporating an antistatic polymer with a repeating unit of formula (I) into a thermoplastic or elastomeric polymeric substrate 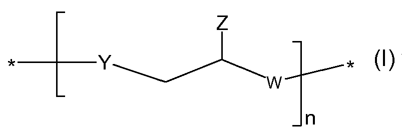 wherein
n is an integer from 5 to 500;
Z is hydrogen, C₁-C₁₈alkyl, OH, C₁-C₁₈alkoxy, a group C(O)R₁₀, -O-C(O)R₁₀ or COOR₁₀ wherein R₁₀ is H or C₁-C₁₈alkyl;
W is C₁-C₂₄alkylene, C₅-C₇cycloalkylene,-O-(CH₂-O)ₚ-, -O-(CH₂-CH₂-O)_{q}-, O-((CH₂)_{Z}-O)ₜ-, CH₂-T-CH₂-CHZ-CH₂-;
T is C₁-C₂₄alkylene, C₅-C₇cycloalkylene, -O-(CH₂-O)ₚ-, -O-(CH₂-CH₂-O)_{q}-, O-(CH₂)_{z}-O-;
wherein p, q, z and t are independently integers from 0 to 100;
Y is a group 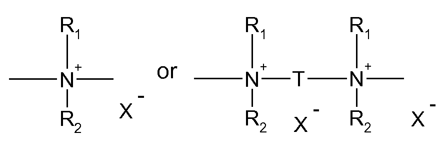 wherein
R₁ and R₂ are independently from each other H, C₁-C₁₈alkyl or R₁ and R₂ together with the nitrogen atom to which they are bonded form a 5, 6 or 7 membered cyclic ring; and
X⁻ is the anion of a C₁-C₁₈carboxylic acid, the anion of an aromatic or aliphatic sulfonic acid, sulphate, phosphate, borate, nitrate, ClO₄⁻, PF₆⁻, or BF₄⁻.

The preparation may be carried out in a manner known *per se* by mixing the said components and, if desired, further additives with the polymer using devices known *per se,* such as calenders, mixers, kneaders, extruders and the like. The additives may be added individually or in admixture with one another. It is also possible to use so-called master batches.

An antistatic thermoplastic polymer obtainable according to the present invention can be made into the desired form in known manner. Such processes include, for example, grinding, calendering, extruding, injection-moulding, sintering, compression/sintering or spinning, also extrusion blow-moulding, or processing according to the plastisol method. The antistatic thermoplastic polymer may also be processed to form foamed materials.

Also within the scope of the present invention is the use of a polymer with a repeating unit of formula (I) as described above as an antistatic additive or as a surface modifier for thermoplastic or elastomeric polymers.

The instant invention may be advantageously used for anti-dust application in packaging. The objective is to achieve a minimized dust attraction, prolonged visual appeal for rigid packaging personal care (Hair Care, Bath & Shower, Skin Care, Deo) and home care (detergent, household cleaning) or rigid packaging for dairy food (milk, butter, margarine, yoghurt and the like). Suitable substrate polymers for these applications are: HDPE, PP, PS. Typical processing steps are, for example: extrusion blow molding (bottles), injection (deo), sheet (thermoforming for dairy products). The packaging structures may be monolayer or multilayer.

Also of interest are antistatic applications for electronics packaging and transportation, industrial packaging or ESD* (Electrostatic Discharge) protected area equipment. The objective is to protect charge sensitive devices from ESD-events (electronics), to minimize the risk of explosion or ignition of flammable goods, to enhance long-term performance and reliability. Typical substrate polymers are PP and PS.

The compounds of formula (I) are partly novel and consequently a further aspect of the invention is a compound of formula (Ia) 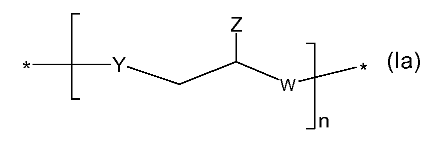 wherein
n is an integer from 5 to 500;
Z is hydrogen, C₁-C₁₈alkyl, OH, C₁-C₁₈alkoxy, a group C(O)R₁₀, -O-C(O)R₁₀ or COOR₁₀ wherein R₁₀ is H or C₁-C₁₈alkyl;
W is C₁-C₂₄alkylene, C₅-C₇cycloalkylene,-O-(CH₂-O)ₚ-, -O-(CH₂-CH₂-O)_{q}-, O-((CH₂)_{Z}-O)ₜ-, CH₂-T-CH₂-CHZ-CH₂-;
T is C₁-C₂₄alkylene, C₅-C₇cycloalkylene,-O-(CH₂-O)ₚ-, -O-(CH₂-CH₂-O)_{q}-, O-(CH₂)_{z}-O-;
wherein p, q, z and t are independently integers from 0 to 100;
Y is a group 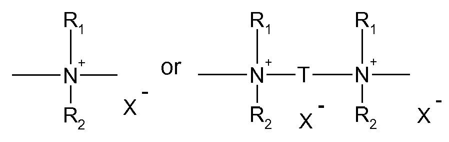 wherein
R₁ and R₂ are independently from each other H, C₁-C₁₈alkyl or R₁ and R₂ together with the nitrogen atom to which they are bonded form a 5, 6 or 7 membered cyclic ring; and
X is CH₃-SO₃⁻, CF₃SO₃⁻, 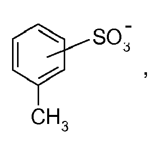 ClO₄⁻, PF₆⁻ or BF₄⁻.

Preferably X⁻ is CH₃-SO₃⁻ or

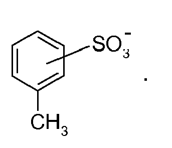

The following examples illustrate the invention.

### A) Preparation Examples

### Example A1: Ion exchange of chloride against methanesulfonate of existing polyamine

The polyamine Alcofix 159(RTM) from Ciba Inc. (80 g), obtained by the polycondensation of epichlorohydrine with dimethylamine, is diluted with 200 mL water. A 25 % w/w solution of sodium methanesulfonate (60 mL) is added and the mixture is ultrafiltered in a stirred cell using a membrane of MWCO=10,000. The ultrafiltration is continued with 60 mL and then 100 mL 20 % sodium methanesulfonate , 200 mL water, 100 mL 20% sodium methanesulfonate, 200 mL water, 100 mL 30% sodium methanesulfonate, and finally with 200 mL water. The chloride content of the effluent is tested using a 0.014 M silver nitrate solution. The water is removed by azeotropic distillation with isopropanol under vacuum and the product is dried in vacuum at 50°C.

### Example A2a: Ion exchange of chloride against toluenesulfonate of existing polyamine.

The ion exchange of chloride against toluenesulfonate of polyamine Alcofix 159(RTM) from Ciba Inc. is carried out in a similar manner as for Example A1 using sodium toluenesulfonate.

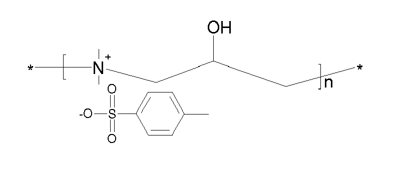

### Example A2b: Ion exchange of chloride against toluenesulfonate of existing polyamine.

The ion exchange of chloride against toluenesulfonate of polyamine Alcofix 160(RTM) from Ciba Inc. is carried out in a similar manner as for Example A1 using sodium toluenesulfonate.

### Example A3: Esterification of free hydroxyl groups of existing polyamine and subsequent ion exchange

The polyamine Alcofix 159(RTM) from Ciba Inc. (50 g) is mixed with tetrabutylammonium bromide (2.7 g) and a solution of 6.8 g sodium hydroxide in 50 mL water. The mixture is cooled in an ice bath and a mixture of lauroyl chloride (39 mL) and N,N-dimethylformamide (12 mL) is added dropwise. When the addition is complete, the ice bath is removed and the mixture is stirred overnight. The solvent is removed under vacuum and the product is rinsed with isopropanol and dried in vacuum. The subsequent ion exchange is carried out in the same manner as in Example A1.

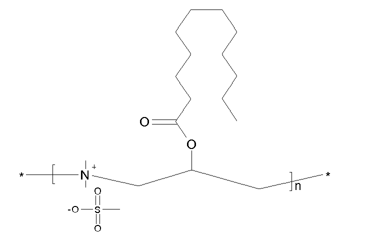

### Example A4: Esterification of free hydroxyl groups of existing polyamine and subsequent ion exchange

The esterification of free hydroxyl groups of polyamine of Alcofix 159(RTM) and subsequent ion exchange is carried out in the same manner as for Example A3.

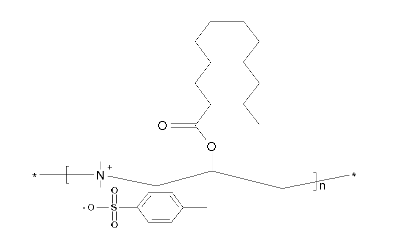

### Example A5: Polycondensation between dimethylamine and 1,6-toluenesulfonylhexane.

Toluene-4-sulfonic acid chloride (78g) is solubilized in tetrahydrofurane (265mL) under nitrogen. A solution of hexanediol (15.4g) in triethylamine (67mL) and tetrahydrofuran (50mL) is added dropwise over one hour maintaining the temperature at 15°C. The reaction mixture is stirred for additional 4 hours at this temperature. The 1,6-toluensulfonylhexane is immediately formed and its purity is controlled with thin layer chromatography. The sulfonyl hexane is filtered and concentrated. It is further precipitated in ethanol to obtain a white solid product (mp. 75-77°C) as demonstrated by thin layer chromatography and 1H-NMR. 1,6-toluensulfonylhexane (5g) is dispersed in ethanol (40mL), the suspension temperature brought to 40°C, the dimethylamine is added dropwise. The reaction mixture is stirred overnight to form a suspension, which is concentrated, diluted again with acetone to obtain a fine suspension which is filtered. The filter cake is rinsed with acetone and dried at 50°C in a vacuum oven.

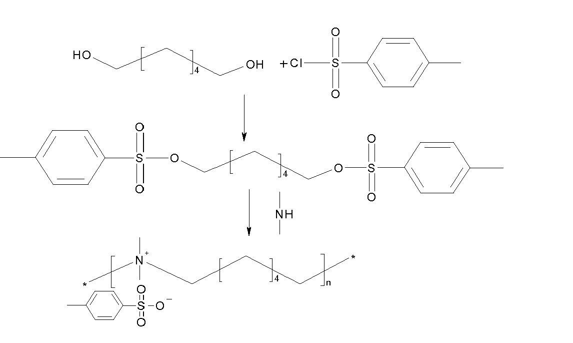

Example A5 describes condensation polymers obtained using bifunctional monomers where the functionality is the leaving group tosylate.

### Example A6: Polycondensation of piperazine and butanediol diglycidyl ether.

Piperazine (2.13 g) is dissolved in a mixture of 2.5 mL cc. hydrochloric acid and 5 mL water. The pH is raised to 9 with 50 % aqueous sodium hydroxide. To this is added 5 g 1,4-butanediol diglycidyl ether at once. After the exothermic reaction has taken place, the mixture is allowed to cool. Methyl toluenesulfonate (9.2 g) is added with a small amount of methanol and the mixture is stirred at 40°C overnight. The next day, the solvent is stripped off. The residual water is removed by azeotropic distillation with isopropanol under vacuum. A hygroscopic off-white solid is obtained.

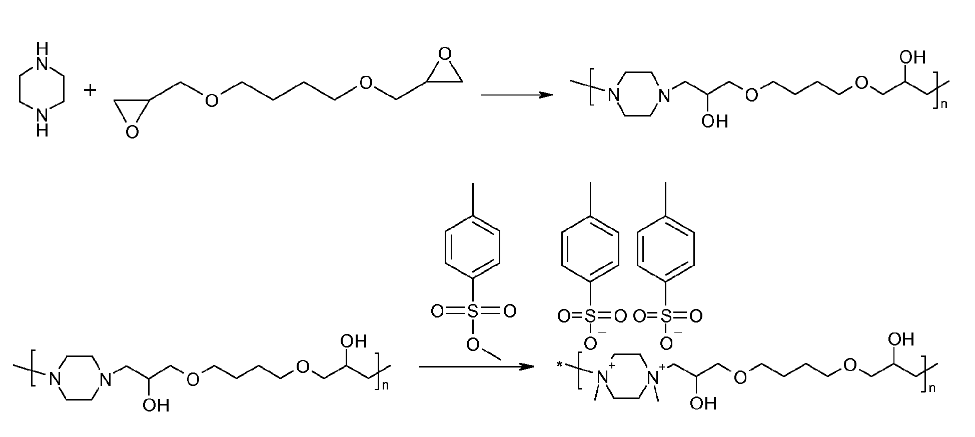

### Example 6 describes condensation polymers obtained using two bifunctional monomers.

### B Application Examples

### Example B1: Thermal Stability

**Table 1: Thermal stability of polyamines depending on the counterion**

| | Counterion of polyamine | Weight loss (wt.%) @ 250°C |
|---|---|---|
| Comparative Alcofix 159 | Chloride | 29 |
| Compound of Example A1 | Mesylate | 3 |
| Compound of Example A2a | Tosylate | 5 |

The thermal stability was measured using a Mettler Toledo TGA/DSC equipment with a heating rate of 10°C/min under a flow of nitrogen of 100mL/min starting from room temperature.

### Example B2: Processing of PS extrusion tapes containing the polyamines of formula I as surface modifiers.

In order to evaluate their processability in PS and surface properties, the new compounds of formula I are incorporated in polystyrene extrusion tapes according to the following procedure:
The polystyrene powder [Styron 484 Natural Polystyrene from Dow Chem. Comp. Inc.] and the compounds according to the invention are dried in a vacuum oven for eight hours at 80°C and 40°C respectively. Appropriate amounts of the respective compounds are added to the dried polystyrene powder to obtain formulations containing up to 20% by weight of the compound. The formulations are mixed in a turbo mixer and extruded in a twin-screw extruder (MiniLab extruder from Thermo Electron Corporation) equipped with a flat die. In this way polystyrene tapes are produced with a width of 5 mm and a thickness of around 0.5 mm. The processing temperature is around 200°C.

The contact angles of the produced tapes are measured with a Dataphysics OCA 30 contact angle device, using the sessile drop method and water as measuring liquid.

The surface resistivity values SR [Ohms/square] are measured with a sprung-tongue electrode in analogy to DIN 53482, at a voltage of 500V, at 22°C, at defined relative humidity of the air (50%, 30% or 15%). The results are summarized in the following Table.
Example B2a is a comparative example as well as the examples B2b to B2e. They show an antistatic effect, but no compatibility with the substrate polymer. Examples B2f to B2k are examples according to the present invention. They show the surface effect and simultaneously the compatibility with the polystyrene. The best examples are B2g, B2i and B2k with the two types of surface effects observed.

**Table 2:Processing of PS extrusion tapes containing the polyamines according to the invention as surface modifiers**

| Ex. | Additive | Contact angle [°] | SR [Ohm/sq] @ 50% RH | SR [Ohm/sq] @ 30% RH | SR [Ohm/sq] @ 15% RH | Compatibility |
|---|---|---|---|---|---|---|
| B2a | None | 102 | 8.77E+13 | 1.31E+14 | 2.37E+14 | - |
| B2b | 10% | 94 | 8.94E+06 | - | 1.51 E+09 | Strong |
| | Alcofix 159 | | | | | discoloration |
| B2c | 20% | 93 | 1.14E+05 | - | 9.69E+07 | Strong |
| | Alcofix 159 | | | | | discoloration |
| B2d | 10% | 96 | 9.62E+08 | - | 1.77E+11 | Strong |
| | Alcofix 160 | | | | | discoloration |
| B2e | 20% | 97 | 8.08E+04 | - | 1.02E+08 | Strong |
| | Alcofix 160 | | | | | discoloration |
| B2f | 5% | 88 | 9.82E+13 | 1.58E+13 | | Good |
| | Example A1 | | | | | |
| B2g | 10% | 92 | 1.30E+09 | 1.44E+11 | 6.97E+13 | Good |
| | Example A1 | | | | | |
| B2h | 10% | 99 | 1.30E+14 | 1.58E+14 | 1.53E+14 | Good |
| | Example | | | | | |
| | A2a | | | | | |
| B2i | 20% | 88 | 1.89E+11 | 6.20E+13 | 3.08E+14 | Good |
| | Example | | | | | |
| | A2a | | | | | |
| B2k | 20% | 95 | 3.38E+09 | - | 8.47E+12 | Good |
| | Example A3 | | | | | |

### Example B3: Processing of PP extrusion tapes containing the polyamines according to the invention as surface modifiers.

In order to evaluate their processability in PP and surface properties, the compounds are incorporated in polypropylene extrusion tapes according to the following procedure:
The polypropylene powder [HC115MO from Borealis] and the compounds according to the invention are dried in a vacuum oven for eight hours at 80°C and 40°C respectively. Appropriate amounts of the compound according to the invention are added to the dried polypropylene powder to obtain formulations containing up to 20% by weight of the compound. The formulations are mixed in a turbo mixer and extruded in a twin-screw extruder (MiniLab extruder from Thermo Electron Corporation) equipped with a flat die. In this way polypropylene tapes are produced with a width of 5 mm and a thickness of around 0.5 mm. The processing temperature is around 220°C.

The contact angles of the produced tapes are measured with a Dataphysics OCA 30 contact angle device, using the sessile drop method and water as measuring liquid.

The surface resistivity values SR [Ohms/square] are measured with a sprung-tongue electrode in analogy to DIN 53482, at a voltage of 500V, at 22°C, at defined relative humidity of the air (50%, 30% or 15%). The results are summarized in following Table.

Example B3a is a comparative example as well as examples B3b to B3e. They show the surface effect obtained with the additives (reduction of the contact angle and a reduction of the surface resitivity and hence an overall increase of the surface energy), however no compatibility with the polypropylene. Examples B3f and B3h are also comparative examples; they have no surface effect, although they are compatible with polypropylene. Examples B3g, B3i and B3k are examples of the present invention, as they show the surface effect and simultaneously the compatibility with the polypropylene.

**Table 3: Processing of PP extrusion tapes containing the polyamines of formula I as surface modifiers.**

| Ex. | Additive | Contact angle [°] | SR [Ohm/sq] @ 50% RH | SR [Ohm/sq] @ 30% RH | SR [Ohm/sq] @ 15% RH | Compatibility |
|---|---|---|---|---|---|---|
| B3a | None | 106 | 9.98E+14 | 3.07E+13 | 9.08E+14 | - |
| B3b | 10% Alcofix | 81 | 1.90E+07 | - | 4.73E+09 | Strong |
| | 159 | | | | | discoloration |
| B3c | 20% Alcofix | 92 | 1.58E+07 | - | 1.44E+09 | Strong |
| | 159 | | | | | discoloration |
| B3d | 10% Alcofix | 96 | 2.59E+09 | - | 6.41E+12 | Strong |
| | 160 | | | | | discoloration |
| B3e | 20% Alcofix | 98 | 2.79E+07 | - | 1.34E+10 | Strong |
| | 160 | | | | | discoloration |
| B3f | 5% | 103 | 1.85E+13 | 2.32E+13 | - | Good |
| | Example A1 | | | | | |
| B3g | 10% | 100 | 5.55E+08 | 3.16E+09 | 1.60E+13 | Good |
| | Example A1 | | | | | |
| B3h | 10% | 101 | 9.56E+13 | - | 9.99E+14 | Good |
| | Example | | | | | |
| | A2a | | | | | |
| B3i | 20% | 80 | 2.02E+11 | - | 1.76E+12 | Good |
| | Example | | | | | |
| | A2a | | | | | |
| B3k | 20% | 93 | 5.95E+08 | 3.57E+10 | 3.90E+12 | Good |
| | Example A3 | | | | | |

### Example B4: Processing of HDPE extrusion tapes containing the polyamines according to the invention as surface modifiers.

In order to evaluate their processability in HDPE and surface properties, the new compounds of formula I are incorporated in polyethylene extrusion tapes according to the following procedure:
The high density polyethylene powder [BL2571 from Borealis or Purell GF 4760 from LyndellBasell] and the compounds according to the invention are dried in a vacuum oven for eight hours at 80°C and 40°C respectively. Appropriate amounts of the compounds according to the invention are added to the dried polyethylene powder to obtain formulations containing up to 20% by weight of the compound. The formulations are mixed in a turbo mixer and extruded in a twin-screw extruder (MiniLab extruder from Thermo Electron Corporation) equipped with a flat die. In this way polyethylene tapes are produced with a width of 5 mm and a thickness of around 0.5 mm. The processing temperature is around 220°C.

The contact angles of the produced tapes are measured with a Dataphysics OCA 30 contact angle device, using the sessile drop method and water as measuring liquid.
The surface resistivity values SR [Ohms/square] are measured with a sprung-tongue electrode in analogy to DIN 53482, at a voltage of 500V, at 22°C, at defined relative humidity of the air (50%, 30% or 15%). The results are summarized in following Table.

Example B4a, B4d, B4e, B4g are comparative examples. Examples B4b, B4c and B4f are examples of the present invention. They show the surface effect and simultaneously the compatibility with the polypropylene.

**Table 4: Processing of HDPE extrusion tapes containing the polyamines according to the invention as surface modifiers.**

| Ex. | Additive | Contact angle [°] | SR [Ohm/sq] @ 50% RH | SR [Ohm/sq] @ 30% RH | SR [Ohm/sq] @ 15% RH | Compatibility |
|---|---|---|---|---|---|---|
| B4a | None | 100 | 3.32E+13 | 6.16E+13 | 2.11 E+14 | - |
| B4b | 5% Example A1 | 95 | 1.60E+10 | 1.26E+12 | 1.22E+14 | Good |
| B4c | 10% Example | 90 | 2.04E+09 | 4.97E+10 | 1.69E+13 | Good |
| | A1 | | | | | |
| B4d | 20% Example | 71 | 6.22E+07 | 1.30E+08 | 1.93E+09 | Rough |
| | A1 | | | | | surface |
| B4e | 5% Example | 107 | 1.82E+13 | | 1.62E+14 | Good |
| | A2a | | | | | |
| B4f | 10% Example | 75 | 6.49E+13 | | 1.37E+14 | Good |
| | A2a | | | | | |
| B4g | 20% Example | 86 | 5.61 E+13 | | 2.24E+14 | Rough |
| | 2a | | | | | surface |

### Example B5: Processing of HDPE injection molded plaques containing the polyamines according to the invention as surface modifiers.

In order to evaluate their processability in HDPE and surface properties, the new compounds of the formula I are incorporated in high density polyethylene injection molded plaques according to the following procedure:
The high density polyethylene powder [BL2571 from Borealis or Purell GF 4760 from LyndellBasell] and the compound of formula I are dried in a vacuum oven for eight hours at 80°C and 40°C respectively. Appropriate amounts of the compound of formula I are added to the dried polyethylene powder to obtain formulations containing up to 20% by weight of the compound. The formulations are mixed in a turbo mixer and compounded to pellets in a twin-screw extruder (MiniLab or Polylab from Thermo Electron Corp.) and further injection molded to plaques of a width of 30 mm, length of 40mm and thickness of 2 mm using an micro-injection molding machine (BabyPlast from CronoPlast). The processing temperature is around 220°C.

The contact angles of the produced samples are measured with a Dataphysics OCA 30 contact angle device, using the sessile drop method and water as measuring liquid.
The surface resistivity values SR [Ohms/square] are measured with a sprung-tongue electrode in analogy to DIN 53482, at a voltage of 500V, at 22°C, at defined relative humidity of the air (50%, 30% or 15%). The results are summarized in the following Table.

Example B5a is a comparative example. Examples B5b and B5c are examples according to the present invention. They show the surface effect and simultaneously the compatibility with the polyethylene.

**Table 5: Processing of HDPE injection molded plaques containing the polyamines according to the invention as surface modifiers.**

| Ex. | Additive | Contact angle [°] | SR [Ohm/sq] @ 50% RH | SR [Ohm/sq] @ 30% RH | SR [Ohm/sq] @ 15% RH | Compatibility |
|---|---|---|---|---|---|---|
| B5a | None | 100 | 6.67E+14 | 2.95E+14 | 8.08E+14 | - |
| B5b | 5% | 95 | 4.70E+12 | 6.23E+13 | | Good |
| | Example | | | | | |
| | A1 | | | | | |
| B5c | 10% | 93 | 1.68E+10 | 1.59E+11 | 9.55E+12 | Good |
| | Example | | | | | |
| | A1 | | | | | |

### Example B6: Procedure used for the evaluation of the permanency of the surface effect obtained in various plastics with the polyamines according to the invention as surface modifiers.

The permanency of the surface resistivity is evaluated using the following procedure:
The sample is dipped in distilled water at defined temperature and time. It is left to dry in ambient air for 24 hours and immediately measured at 50% relative humidity of the air without conditioning and again after prolonged conditioning at 50% relative humidity of the air. The following Table summarizes the durability of the surface effect achieved with the polyamines according to the invention as surface modifiers for plastics.

Within an experimental error of one decade for the surface resistivity, there is no change observed between the initial value measured after processing and after the water extraction treatment, thus demonstrating the permanency of the additives investigated. Only for the sample B6f, the change observed is larger, however the absolute surface resistivity values remain clearly below the values observed for the blank.

**Table 6: Permanency of the surface effect obtained in polystyrene with the polyamines according to the invention.**

| Example | Sample SR [Ohm/sq] @ 50% RH | Initial value after processing | I | II |
|---|---|---|---|---|
| B6a | B2a PS extrusion sample | 8.77E+13 | 6.21 E+13 | 1.31 E+14 |
| B6b | B2i 20% Example A2a in PS extrusion sample | 1.89E+11 | 5.67E+12 | 4.47E+11 |

| | | | | |
|---|---|---|---|---|
| I After dipping the sample in water at room temperature for 30 minutes and drying in ambient air for 24hours (no conditioning) II After subsequent conditioning for 5 days at 50% relative humidity | | | | |

**Table 7: Permanency of the surface effect obtained in polystyrene with the polyamines according to the invention.**

| Example | Sample SR [Ohm/sq] @ 50% RH | Initial value after processing | I | II |
|---|---|---|---|---|
| B6c | B2a PS extrusion sample | 8.77E+13 | 2.15E+14 | 1.56E+14 |
| B6d | B2i 20% Example A2a in PS extrusion sample | 1.89E+11 | 4.19E+11 | 1.65E+12 |

| | | | | |
|---|---|---|---|---|
| I After dipping the sample in water at 85°C for 30 minutes and drying in ambient air for 24hours (no conditioning) II After subsequent conditioning for 5 days at 50% relative humidity | | | | |

**Table 8: Permanency of the surface effect obtained in polypropylene or high density polyethylene with the polyamines according to the invention.**

| Ex. | Sample SR [Ohm/sq]@ 50% RH | Initial value after | I | II | III | IV |
|---|---|---|---|---|---|---|
| | | processing | | | | |
| B6e | B3a PP extrusion sample | 9.98E+14 | - | - | 1.92E+14 | 2.80E+14 |
| B6f | B3g | 5.55E+08 | - | - | 2.98E+10 | 1.17E+11 |
| | 10% Example A1 in PP extrusion sample | | | | | |
| B6f | B5a | 6.67E+14 | 7.72E+14 | 9.36E+13 | 7.93E+14 | 6.10E+14 |
| | HDPE injection molded sample | | | | | |
| B6g | B5c | 1.68E+10 | 4.69E+11 | 7.51E+10 | 2.11 E+10 | 1.71E+10 |
| | 10% Example A1 in HDPE injection molded sample | | | | | |

| | | | | | | |
|---|---|---|---|---|---|---|
| I After dipping the sample in water at room temperature for 60 minutes and drying in ambient air for 24hours (no conditioning) II After subsequent conditioning for 3 days at 50% relative humidity III After dipping the same sample in water at room temperature for additional 24hours and drying in ambient air for 24hours (no conditioning) IV After subsequent conditioning for 3 days at 50% relative humidity | | | | | | |

## Claims

1. A composition comprising a thermoplastic or elastomeric polymeric substrate and an antistatic polymer with a repeating unit of formula (I) 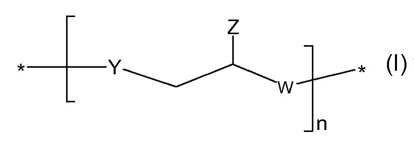 wherein
n is an integer from 5 to 500;
Z is hydrogen, C₁-C₁₈alkyl, OH, C₁-C₁₈alkoxy, a group C(O)R₁₀, -O-C(O)R₁₀ or COOR₁₀ wherein R₁₀ is H or C₁-C₁₈alkyl;
W is C₁-C₂₄alkylene, C₅-C₇cycloalkylene, -O-(CH₂-O)ₚ-, -O-(CH₂-CH₂-O)_{q}-, O-((CH₂)_{Z}-O)ₜ-, CH₂-T-CH₂-CHZ-CH₂-;
T is C₁-C₂₄alkylene, C₅-C₇cycloalkylene,-O-(CH₂-O)ₚ-, -O-(CH₂-CH₂-O)_{q}-, O-(CH₂)_{z}-O-;
wherein p, q, z and t are independently integers from 0 to 100;
Y is a group 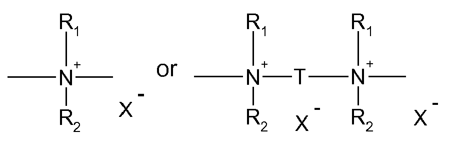 wherein
R₁ and R₂ are independently from each other H, C₁-C₁₈alkyl or R₁ and R₂ together with the nitrogen atom to which they are bonded form a 5, 6 or 7 membered cyclic ring; and
X⁻ the anion of a C₁-C₁₈carboxylic acid, the anion of an aromatic or aliphatic sulfonic acid, sulphate, phosphate, borate, nitrate, ClO₄⁻, PF₆⁻, or BF₄⁻.

2. A composition according to claim 1, wherein the thermoplastic or elastomeric polymeric substrate is a polyolefin, a polystyrene, a copolymer of acrylonitrile/butadiene/styrene (ABS), a polymer of α,β-unsaturated acids, a halogen-containing polymer, a homo- or co-polymer of cyclic ethers, a polymer of unsaturated alcohols and amines, a polyacetal, a polyphenylene oxide, a polyurethane, a polyamide, a polyester, a polyurea, a polycarbonate, a polysulfone or natural rubber.

3. A composition according to claim 2, wherein the thermoplastic or elastomeric polymeric substrate is a polyolefin, a polystyrene, an acrylonitrile/butadiene/styrene (ABS) copolymer, a polymer of α,β-unsaturated acids, a halogen-containing polymer or a homo- or co-polymer of cyclic ethers.

4. A composition according to claim 3, wherein thermoplastic or elastomeric polymeric substrate is polyvinyl chloride (PVC), polyethylene, polystyrene or polypropylene.

5. A composition according to claim 1 wherein in formula (I)
n is an integer from 5 to 100;
Z is hydrogen, OH or -OC(O)R₁₀ wherein R₁₀ is H or C₁-C₁₈alkyl;
W is C₁-C₂₄alkylene, -O-(CH₂-O)ₚ-, -O-(CH₂-CH₂-O)_{q}-;
T is C₁-C₂₄alkylene, -O-(CH₂-O)ₚ-, -O-(CH₂-CH₂-O)_{q}-;
wherein p and q are independently integers from 1 to 20;
Y is a group 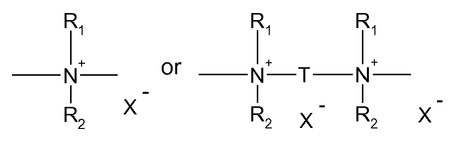 wherein
R₁ and R₂ are independently from each other H, C₁-C₁₈alkyl or R₁ and R₂ together with the nitrogen atom to which they are bonded form a 5, 6 or 7 membered cyclic ring; and
X⁻ is the anion of a an aromatic or aliphatic sulfonic acid, sulphate, phosphate, borate, nitrate, ClO₄⁻, PF₆⁻ or BF₄⁻.

6. A composition according to claim 1 or 5 wherein X⁻ is CH₃-SO₃⁻, CF₃SO₃⁻ or

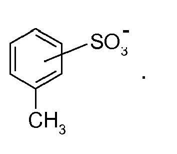

7. A composition according to any of the preceding claims wherein the antistatic polymer with a repeating unit of formula (I) according to claim 1 is present in an amount of from 0.1% to 30% by weight, based on the weight of the thermoplastic or elastomeric polymeric substrate.

8. A composition according to any of the preceding claims comprising additionally an additive selected from the group consisting of a UV absorber, a sterically hindered amine, a phenolic antioxidant, a phosphite or phosphonite and a benzofuranone or indolinone.

9. A process for preparing an antistatic thermoplastic or elastomeric polymeric article comprising incorporating an antistatic polymer with a repeating unit of formula (I) into a thermoplastic or elastomeric polymeric substrate 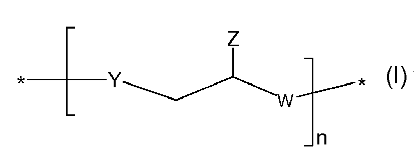 wherein
n is an integer from 5 to 500;
Z is hydrogen, C₁-C₁₈alkyl, OH, C₁-C₁₈alkoxy, a group C(O)R₁₀, -O-C(O)R₁₀ or COOR₁₀ wherein R₁₀ is H or C₁-C₁₈alkyl;
W is C₁-C₂₄alkylene, C₅-C₇cycloalkylene,-O-(CH₂-O)ₚ-, -O-(CH₂-CH₂-O)_{q}-, O-((CH₂)_{z}-O)ₜ-, CH₂-T-CH₂-CHZ-CH₂-;
T is C₁-C₂₄alkylene, C₅-C₇cycloalkylene, -O-(CH₂-O)ₚ-, -O-(CH₂-CH₂-O)_{q}-, O-(CH₂)_{z}-O-;
wherein p, q, z and t are independently integers from 0 to 100;
Y is a group 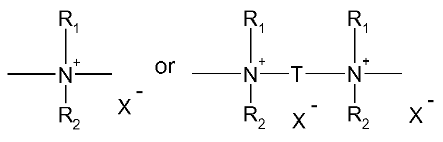 wherein
R₁ and R₂ are independently from each other H, C₁-C₁₈alkyl or R₁ and R₂ together with the nitrogen atom to which they are bonded form a 5, 6 or 7 membered cyclic ring; and
X⁻ is the anion of a C₁-C₁₈carboxylic acid, the anion of an aromatic or aliphatic sulfonic acid, sulphate, phosphate, borate, nitrate, ClO₄⁻, PF₆⁻, or BF₄⁻.

10. Use of a polymer with a repeating unit of formula (I) according to claim 1 as an antistatic additive for thermoplastic or elastomeric polymers.

11. Use of a polymer with a repeating unit of formula (I) according to claim 1 as a surface modifier for thermoplastic or elastomeric polymers.

12. A compound of formula (Ia) 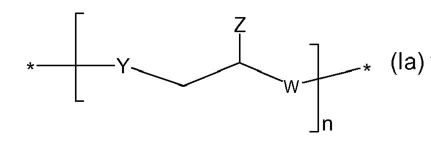 wherein
n is an integer from 5 to 500;
Z is hydrogen, C₁-C₁₈alkyl, OH, C₁-C₁₈alkoxy, a group C(O)R₁₀, -O-C(O)R₁₀ or COOR₁₀ wherein R₁₀ is H or C₁-C₁₈alkyl;
W is C₁-C₂₄alkylene, C₅-C₇cycloalkylene,-O-(CH₂-O)ₚ-, -O-(CH₂-CH₂-O)_{q}-, O-((CH₂)_{z}-O)ₜ-, CH₂-T-CH₂-CHZ-CH₂-;
T is C₁-C₂₄alkylene, C₅-C₇cycloalkylene,-O-(CH₂-O)ₚ-, -O-(CH₂-CH₂-O)_{q}-, O-(CH₂)_{z}-O-;
wherein p, q, z and t are independently integers from 0 to 100;
Y is a group 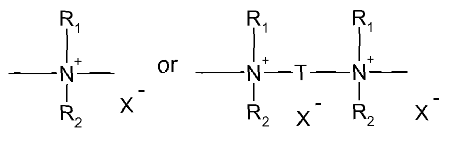 wherein
R₁ and R₂ are independently from each other H, C₁-C₁₈alkyl or R₁ and R₂ together with the nitrogen atom to which they are bonded form a 5, 6 or 7 membered cyclic ring; and
X is CH₃-SO₃⁻, CF₃SO₃⁻, 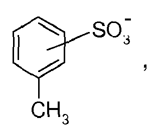 ClO₄⁻, PF₆⁻ or BF₄⁻.

13. A compound according to claim 12 wherein X⁻ is CH₃-SO₃⁻ or
